(19) Europäisches Patentamt
European Patent Office
Office européen des brevets

(11) **EP 1 857 776 B1**

(12) **FASCICULE DE BREVET EUROPEEN**

(45) Date de publication et mention
de la délivrance du brevet:
**23.12.2009   Bulletin 2009/52**

(51) Int Cl.:
***G01C 5/06*** *(2006.01)*   ***G04G 1/04*** *(2006.01)*

(21) Numéro de dépôt: **06114255.0**

(22) Date de dépôt: **19.05.2006**

(54) **Altimètre barométrique comportant un dispositif de compensation en température**

Barometrisch Höhenmessgerät mit Temperaturkorrekturvorrichtung

Barometric altimeter with a temperature compensating device

(84) Etats contractants désignés:
**AT BE BG CH CY CZ DE DK EE ES FI FR GB GR HU IE IS IT LI LT LU LV MC NL PL PT RO SE SI SK TR**

(43) Date de publication de la demande:
**21.11.2007   Bulletin 2007/47**

(73) Titulaire: **ETA SA Manufacture Horlogère Suisse 2540 Grenchen (CH)**

(72) Inventeurs:
• **Saporito, Giuseppe**
**1007, Lausanne (CH)**

• **Germiquet, Christophe**
**2515, Prêles (CH)**
• **Claude, Stéphane**
**2540, Grenchen (CH)**

(74) Mandataire: **Ravenel, Thierry Gérard Louis et al ICB**
**Ingénieurs Conseils en Brevets SA**
**Faubourg de l'Hôpital 3**
**CH-2001 Neuchâtel (CH)**

(56) Documents cités:
**WO-A-2004/070317     US-A- 5 224 059**
**US-A1- 2004 233 788**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

**Description**

La présente invention concerne un altimètre barométrique portable et une méthode de détermination de l'altitude pour un tel altimètre.

Plus particulièrement, l'altimètre barométrique selon la présente invention comporte un capteur de pression, une unité de calcul qui détermine une valeur d'altitude en fonction de la pression mesurée par le capteur et en fonction d'une température de référence correspondant à une estimation de la température de la masse d'air au niveau de la mer, et une unité de mesure du temps qui fournit une information de calendrier.

L'invention concerne notamment un tel altimètre agencé dans une montre-bracelet électronique.

Dans ce type d'altimètre, pour obtenir l'altitude, l'unité de calcul met en oeuvre une formule définie par des normes internationales qui montre la relation entre l'altitude, la pression barométrique, et la température. Cette formule est la suivante:

$$H = 153{,}85 * T_0 * [1 - (P/P_0)^{0{,}190255}] \qquad (1)$$

Dans cette formule, $T_0$ est la température de la masse d'air au niveau de la mer en degrés Kelvin, $P$ est la pression barométrique mesurée par l'altimètre en millibars, et $P_0$ est la pression atmosphérique au niveau de la mer en millibars.

Généralement, la température de la masse d'air au niveau de la mer est fixée à une valeur par défaut, ce qui conduit à des erreurs de calcul de l'altitude lorsque la valeur réelle de la température de la masse d'air au niveau de la mer est différente de cette valeur par défaut.

Pour corriger en partie ces erreurs, le document US 5 224 059 propose de mémoriser dans l'altimètre une série de valeurs de température de référence de la masse d'air au niveau de la mer correspondant à différentes valeurs de latitude et à différentes périodes de l'année. Le porteur de l'altimètre doit donc saisir manuellement la latitude de sa position pour permettre à l'altimètre de sélectionner une valeur de température de référence déterminée en fonction de la date.

Cette solution n'est pas complètement satisfaisante car elle nécessite que le porteur connaisse la latitude de sa position ce qui n'est pas toujours le cas. De plus, pour une date déterminée, suivant la longitude de la position du porteur sur le globe terrestre, la valeur de température de référence peut varier énormément ce qui nécessite, soit de limiter l'utilisation de l'altimètre à une région déterminée du globe terrestre, soit d'imposer au porteur de saisir aussi la valeur de la longitude.

Cette solution présente donc l'inconvénient de ne pas être suffisamment intuitive ce qui pénalise l'ergonomie de l'altimètre.

De plus, cette solution nécessite une capacité importante de mémorisation ce qui la rend coûteuse.

La présente invention vise à remédier à ces inconvénients en proposant une solution simple et économique qui permette de réaliser un altimètre barométrique plus intuitif.

Dans ce but, l'invention propose un altimètre barométrique du type décrit précédemment, caractérisé en ce qu'il comporte un circuit de correction qui sélectionne la valeur de la température de référence, parmi une série de valeurs contenues dans une base de données embarquée dans l'altimètre, en fonction de la date et en fonction d'une valeur de climat prédéfinie.

L'altimètre selon l'invention permet d'obtenir une altitude précise tout en garantissant une grande simplicité d'utilisation de l'altimètre. En particulier, le paramétrage de l'altimètre est facile à mettre en oeuvre et ne requiert pas une capacité de mémorisation importante. Pour le porteur, la saisie du climat est une opération simple à effectuer et intuitive car, même sans consulter un planisphère, il peut déjà connaître le climat du lieu où il se situe.

Avantageusement, la valeur de climat est sélectionnée parmi cinq valeurs prédéfinies qui sont : tempéré, méditerranéen, aride, tropical, polaire. Les expérimentations du déposant ont montré que le choix de ces cinq valeurs de climat constitue un bon compromis entre la précision des calculs d'altitude et la simplicité d'utilisation de l'altimètre. Le nombre réduit de climats prédéfinis permet aussi de faciliter les opérations de paramétrage ainsi que les opérations de saisie puisqu'il suffit à l'utilisateur de faire défiler cinq valeurs et d'en sélectionner une. Il n'est donc pas nécessaire de prévoir des organes de commande complexes ou des manipulations fastidieuses.

De plus, le circuit de correction sélectionne la valeur de la température de référence en fonction d'une indication de la position de l'altimètre par rapport à l'équateur sélectionnée parmi deux valeurs correspondant respectivement à l'hémisphère nord, et l'hémisphère sud, ce qui permet de différencier les températures de référence sélectionnées en fonction de l'hémisphère où se situe l'altimètre.

Pour encore améliorer la précision des calculs d'altitude, le circuit de correction ajuste la valeur de la température de référence en fonction de paramètres complémentaires. Ainsi, le circuit de correction ajuste la valeur de la température de référence sélectionnée en fonction du quantième dans le mois en cours, de manière à tenir compte des variations de température de la masse d'air au cours du mois. Le circuit de correction peut aussi ajuster la valeur de la température de référence sélectionnée en fonction de l'heure, de manière à tenir compte des variations de température de la masse d'air au cours de la journée.

L'invention propose aussi une méthode de détermination de l'altitude pour un altimètre barométrique portable comportant les étapes suivantes :

- sélection automatique d'une valeur de température de référence parmi une série de valeurs contenues dans une base de données embarquée dans l'altimètre, la température de référence correspondant à une estimation de la température de la masse d'air au niveau de la mer,
- mesure d'une valeur de pression par un capteur de pression,
- calcul d'une valeur d'altitude en fonction de la valeur de pression et en fonction de la température de référence sélectionnée,

caractérisée en ce que, au cours de l'étape de sélection, la valeur de la température de référence est sélectionnée en fonction de la date et en fonction d'une valeur de climat prédéfinie.

Cette méthode présente les mêmes avantages que l'altimètre selon l'invention, c'est-à-dire un bon compromis entre la précision de détermination de l'altitude et la simplicité de fonctionnement.

Selon d'autres caractéristiques de cette méthode :

- la valeur de climat est sélectionnée parmi cinq valeurs prédéfinies qui sont : tempéré, méditerranéen, aride, tropical, polaire;
- la valeur de la température de référence est sélectionnée en outre en fonction d'une indication de la position de l'altimètre par rapport à l'équateur sélectionnée parmi deux valeurs correspondant respectivement à l'hémisphère nord et l'hémisphère sud;
- lors de la sélection de la position de l'altimètre par rapport à l'équateur, une troisième valeur peut être sélectionnée de manière à commander le fonctionnement de l'altimètre dans un mode non corrigé, et en ce que, dans le mode non corrigé, la valeur de la température de référence est fixée à une valeur déterminée ne tenant pas compte du climat;
- il est prévu une première étape de correction au cours de laquelle la valeur de la température de référence, sélectionnée lors de l'étape de sélection, est ajustée en fonction du quantième dans le mois en cours de manière à tenir compte des variations de la température de la masse d'air au cours du mois;
- il est prévu une seconde étape de correction au cours de laquelle la valeur de la température de référence, sélectionnée lors de l'étape de sélection, est ajustée en fonction de l'heure, de manière à tenir compte des variations de la température de la masse d'air au cours de la journée;
- il est prévu une étape de sélection manuelle de la valeur de climat.

D'autres caractéristiques et avantages de la présente invention apparaîtront plus clairement à la lecture de la description détaillée qui suit, faite en référence aux dessins annexés donnés à titre d'exemple non limitatifs et dans lesquels :

- la figure 1 est un schéma qui représente un altimètre barométrique portable réalisé conformément aux enseignements de l'invention;
- la figure 2 est une vue de dessus qui représente schématiquement une montre-bracelet équipée de l'altimètre de la figure 1;
- la figure 3 est un schéma qui illustre le découpage d'un planisphère en zones correspondant à cinq climats prédéfinis.

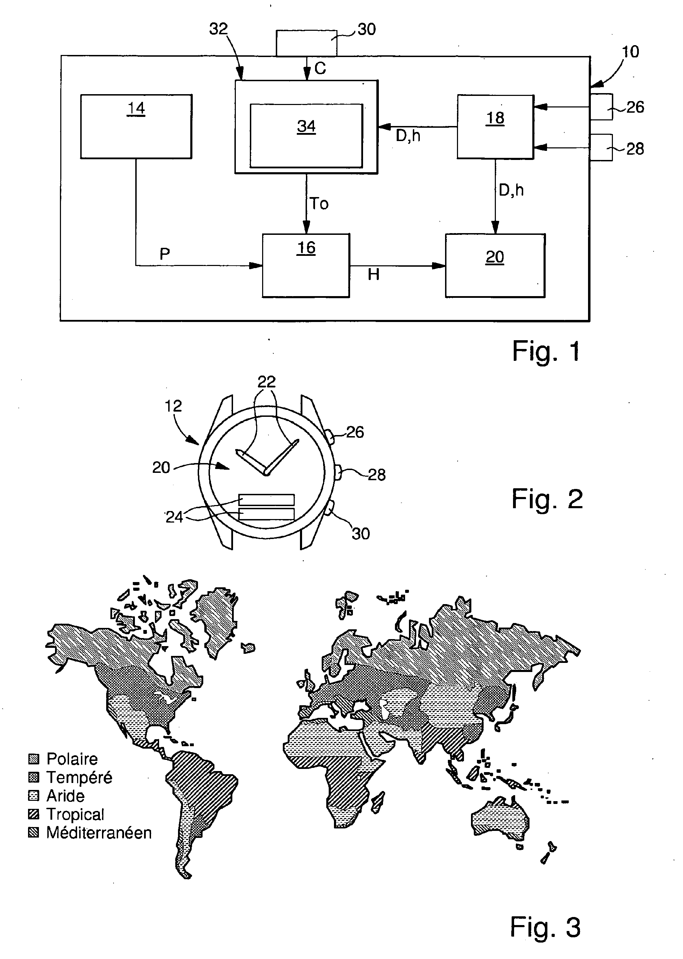

Sur la figure 1, on a représenté un altimètre 10 barométrique portable qui est réalisé conformément aux enseignements de l'invention.

De préférence, l'altimètre 10 est agencé dans une montre-bracelet 12 électronique telle que celle qui est représentée sur la figure 2. Elle comporte un capteur 14 de pression qui est relié à une unité de calcul 16 prévue pour déterminer une valeur d'altitude H en fonction de la pression P mesurée par le capteur 14 et en fonction d'une température de référence T0 correspondant à une estimation de la température de la masse d'air au niveau de la mer. L'unité de calcul 16 met en oeuvre la formule (1) définie précédemment pour calculer l'altitude H.

La montre-bracelet 12 comporte aussi une unité de mesure du temps 18 qui est prévue pour fournir l'heure h et une information de calendrier, ici la date D, et des moyens d'affichage 20 constitués ici par des aiguilles 22 et par deux écrans 24 à cristaux liquides.

Selon l'exemple représenté, l'heure h est affichée de manière analogique au moyen des aiguilles 22 et la date D et l'altitude H sont affichées de manière digitale au moyen des écrans 24.

La montre-bracelet 12 comporte encore des organes de commande 26, 28, 30 manuels permettant de commander les différentes fonctions de la montre-bracelet. Un premier bouton-poussoir 26 peut servir au réglage de la date D, une couronne de mise à l'heure 28 peut servir au réglage de l'heure h.

Conformément aux enseignements de l'invention, l'altimètre 10 comporte un circuit de correction 32 qui sélectionne la valeur de la température de référence T0, parmi une série de valeurs de températures standards $T_s$ contenues dans une base de données embarquée dans l'altimètre 10, en fonction de la date D et en fonction d'une valeur de climat C prédéfinie. A cet effet, le circuit de correction 32 comporte une mémoire 34 dans laquelle la base de données est enregistrée.

La base de données est représentée ci-dessous sous la forme d'un tableau (2).

Tableau (2)

| | TEMPERATURES STANDARDS | | | | | | | | | | | |
|---|---|---|---|---|---|---|---|---|---|---|---|---|
| | JAN | FEV | MAR | AVR | MAI | JUIN | JUIL | AOU | SEP | OCT | NOV | DEC |
| **Polaire** | -10 | -8 | -3 | 2 | 9 | 14 | 16 | 13 | 9 | 3 | -5 | -10 |
| **Tempéré** | -2 | -1 | 3 | 9 | 14 | 19 | 21 | 20 | 16 | 11 | 5 | 0 |
| **Tempéré Hémisphère Sud** | 21 | 21 | 19 | 16 | 13 | 11 | 10 | 11 | 13 | 15 | 18 | 20 |
| **Méditerranéen** | 7 | 8 | 10 | 13 | 17 | 20 | 22 | 22 | 20 | 16 | 11 | 8 |
| **Méditerranéen Hémisphère Sud** | 21 | 21 | 19 | 16 | 13 | 11 | 11 | 11 | 13 | 15 | 17 | 20 |
| **Aride** | 11 | 14 | 18 | 22 | 25 | 28 | 29 | 28 | 26 | 22 | 17 | 13 |
| **Aride Hémisphère Sud** | 23 | 23 | 22 | 19 | 16 | 13 | 13 | 14 | 17 | 19 | 21 | 22 |
| **Tropical** | 21 | 21 | 23 | 24 | 25 | 26 | 26 | 27 | 26 | 25 | 23 | 22 |

Le tableau (2) contient pour chaque mois de l'année et pour chaque valeur de climat C prédéfinie, une température standard $T_s$ en degrés Celsius correspondant globalement à une valeur moyenne de la température de la masse d'air au niveau de la mer pour ce mois et pour ce climat C.

Les valeurs de climat C comprennent, de préférence, cinq valeurs prédéfinies qui sont : climat tempéré $C_{Te}$, climat méditerranéen $C_{Me}$, climat aride $C_{Ar}$, climat tropical $C_{Tr}$, climat polaire $C_{Po}$. Ces valeurs de climat C correspondent à une version simplifiée de la classification des climats Köppen.

Pour tenir compte des différences de température entre certains climats dans l'hémisphère nord et dans l'hémisphère sud, et pour tenir compte de l'inversion des saisons entre les deux hémisphères, les climats tempéré $C_{Te}$, méditerranéen $C_{Me}$, et Aride $C_{Ar}$ ont été dédoublés respectivement en climat tempéré de l'hémisphère sud $C_{TeS}$, climat méditerranéen de l'hémisphère sud $C_{Mes}$, et climat Aride de l'hémisphère sud $C_{ArS}$.

Sur la figure 3, on a représenté un planisphère découpé en zones correspondant aux cinq climats prédéfinis $C_{Te}$, $C_{Me}$, $C_{Ar}$, $C_{Tr}$, $C_{Po}$.

De préférence, la valeur de climat C est sélectionnée manuellement par le porteur de la montre-bracelet 12, en fonction de la position de l'altimètre 10 sur le planisphère, ici au moyen d'un second bouton-poussoir 30. Pour permettre au circuit de correction 32 de sélectionner la valeur de climat C adéquate en fonction de l'hémisphère dans lequel se situe l'altimètre 10, l'étape de sélection du climat C est précédée d'une étape de sélection de la position de l'altimètre 10 par rapport à l'équateur sélectionnée parmi deux valeurs correspondant respectivement à l'hémisphère nord et à l'hémisphère sud.

On note que, dans le mode de réalisation représenté, il est prévu une seule série de valeurs de température standard $T_s$ pour la zone tropicale et une seule série pour la zone polaire, sans tenir compte de la position de l'altimètre 10 par rapport à l'équateur.

Avantageusement, lors de la sélection de la position de l'altimètre 10 par rapport à l'équateur, une troisième valeur peut être sélectionnée de manière à commander le fonctionnement de l'altimètre 10 dans un mode non corrigé. Dans le mode non corrigé, la valeur de la température de référence $T_0$ est fixée à une valeur déterminée, par exemple 15°C, qui ne tient pas compte du climat C. Ce mode non corrigé peut être le mode de fonctionnement par défaut de la montre-bracelet 12, à sa sortie d'usine. Ainsi, tant que le porteur de la montre-bracelet 12 n'a pas saisi l'information relative à l'hémisphère dans lequel il est situé, la température de référence $T_0$ utilisée dans la formule (1) reste à 15°C. Le mode non corrigé est un mode de fonctionnement dans lequel le porteur n'a pas sélectionné de climat C.

Selon un mode de réalisation avantageux, pendant la sélection manuelle de la valeur de climat C par le porteur de la montre-bracelet 12, au moins un écran 24 est utilisé pour faire défiler et afficher les différentes valeurs de climat C possibles.

Avantageusement, la valeur de la température de référence $T_0$ correspondant à un mois donné pour un climat C donné n'est pas constante durant le mois mais elle varie selon une règle de variation déterminée de manière à tenir compte des variations de température de la masse d'air au cours d'un mois. A cet effet, le circuit de correction 32 ajuste la valeur de la température de référence $T_0$ correspondant au mois en cours et au climat C sélectionné en fonction du jour dans le mois en cours et en suivant la règle de variation. Cette règle de variation est par exemple définie, pour un climat C donné, par un segment de droite qui relie la valeur de la température de standard $T_s$ d'un mois à la valeur de la température standard $T_s$ du mois suivant, la température standard $T_s$ mémorisée dans la base de donnée correspondant à la température de référence $T_0$ au milieu du mois, c'est-à-dire au "15" ou au "15,5" du mois.

En considérant le tableau (2) et en prenant comme exemple le climat tempéré de l'hémisphère nord $C_{Te}$, le segment de droite définissant les variations de la température de référence $T_0$ passe par 14°C le 15 mai et par 19°C le 15 juin. Ce segment de droite définit donc les variations de la température de référence $T_0$ pendant la seconde moitié du mois de mai et pendant la première moitié du mois de juin. Il en est de même pour les autres mois de l'année et pour les autres climat C.

Selon une mode de réalisation encore amélioré, le circuit de correction 32 peut aussi ajuster la valeur de la température de référence $T_0$ sélectionnée en fonction de l'heure h, de manière à tenir compte des variations de température de la masse d'air au cours de la journée, en particulier pour différencier la température en journée de la température pendant la nuit.

On note toutefois que l'on obtient déjà de très bons résultats pour les calculs d'altitude H sans ajuster la valeur de la température de référence $T_0$ en fonction de l'heure h.

On décrit maintenant la méthode de détermination de l'altitude H mise en oeuvre par la montre-bracelet 12 équipée de l'altimètre 10 barométrique portable selon l'invention.

La méthode comporte une étape d'initialisation au cours de laquelle le porteur saisit dans la montre-bracelet 12 la valeur de climat C correspondant à la zone du planisphère où il est situé en utilisant le second bouton-poussoir 30. Par exemple, si le porteur est situé en Suisse, il sélectionne d'abord l'hémisphère nord puis la valeur de climat tempéré $C_{Te}$.

Connaissant la valeur du climat C, le circuit de correction 32, au cours d'une étape de sélection, sélectionne automatiquement une valeur de température de référence $T_0$, parmi la série de températures standards $T_s$ correspondant au climat tempéré $C_{Te}$, en fonction de la date D fournie par l'unité de mesure du temps 18. Par exemple, si la date D est le 20 juillet, le circuit de correction 32 sélectionne la valeur "21" comme température de référence $T_0$.

De plus, au cours d'une première étape de correction, le circuit de correction 32 ajuste la valeur de cette température de référence $T_0$, en fonction du quantième dans le mois en cours. Dans l'exemple mentionné ci-dessus, le quantième est le 20 juillet. Donc, en suivant le segment de droite qui relie la valeur 21°C correspondant au 15 juillet à la valeur 20°C correspondant au 15 août, le circuit de correction 32 détermine que la température de référence doit être égale environ à 20,83°C.

Selon un mode de réalisation perfectionné, au cours d'une seconde étape de correction, le circuit de correction 32 applique à la température de référence $T_0$ un coefficient de correction déterminé, en fonction de l'heure h de la journée. Par exemple, lorsque les mesures de pression P sont effectuées vers deux heures du matin, donc pendant la nuit, en juillet, la valeur de la température de référence $T_0$ peut être diminuée de quatre degrés Celsius.

Au cours d'une étape de calcul, l'unité de calcul 16 de l'altimètre 10 détermine la valeur de l'altitude H en fonction de la mesure de pression P effectuée par le capteur 14 et en fonction de la température de référence $T_0$ sélectionnée et ajustée par le circuit de correction 32.

Au cours d'une étape d'affichage, les moyens d'affichage 20, ici les écrans 24, affichent la valeur de l'altitude H calculée par l'unité de calcul.

A chaque nouvelle mesure de pression P, l'unité de calcul 16 utilise, pour le calcul de l'altitude H, la température de référence $T_0$ sélectionnée et ajustée par le circuit de correction 32. Ainsi, le calcul de l'altitude H est toujours effectué en utilisant une température de référence $T_0$ appropriée puisque celle-ci s'adapte à la date D du jour et à l'heure h de la journée.

Selon une variante de réalisation, l'altimètre 10 selon l'invention peut aussi comporter un circuit de correction permettant de corriger la valeur de la pression de référence $P_0$ utilisée dans la formule (1) de calcul de l'altitude H, notamment en vue de distinguer les variations de pression P dues à des changements de météo de celles dues à des déplacements du porteur de l'altimètre 10.

**Revendications**

1. Altimètre (10) barométrique portable comportant un capteur de pression (14), une unité de calcul (16) qui détermine une valeur d'altitude (H) en fonction de la pression (P) mesurée par le capteur (14) et en fonction d'une température de référence ($T_0$) correspondant à une estimation de la température de la masse d'air au niveau de la mer, et une unité de mesure du temps (18) qui fournit une information de calendrier (D), **caractérisé en ce qu'**il comporte un circuit de correction (32) qui sélectionne la valeur de la température de référence ($T_0$), parmi une série de valeurs ($T_S$) contenues dans une base de données embarquée dans l'altimètre (10), en fonction de la date (D) et en fonction d'une valeur de climat (C) prédéfinie.

2. Altimètre (10) selon la revendication précédente, **caractérisé en ce que** la valeur de climat (C) est sélectionnée parmi cinq valeurs prédéfinies qui sont : tempéré ($C_{Te}$), méditerranéen ($C_{Me}$), aride ($C_{Ar}$), tropical ($C_{Tr}$), polaire ($C_{Po}$).

3. Altimètre (10) selon l'une quelconque des revendications précédentes, **caractérisé en ce que** le circuit de correction (32) sélectionne en outre la valeur de la température de référence ($T_0$) en fonction d'une indication de la position de l'altimètre (10) par rapport à l'équateur sélectionnée parmi deux valeurs correspondant respectivement à l'hémisphère nord et l'hémisphère sud.

4. Altimètre (10) selon l'une quelconque des revendications précédentes, **caractérisé en ce que** le circuit de correction (32) ajuste en outre la valeur de la température de référence ($T_0$) sélectionnée en fonction du quantième dans le mois en cours, de manière à tenir compte des variations de température de la masse d'air au cours du mois.

5. Altimètre (10) selon l'une quelconque des revendications précédentes, **caractérisé en ce que** le circuit de correction (32) ajuste en outre la valeur de la température de référence ($T_0$) sélectionnée en fonction de l'heure (h), de manière à tenir compte des variations de température de la masse d'air au cours de la journée.

6. Altimètre (10) selon l'une quelconque des revendications précédentes, **caractérisé en ce qu'**il comporte des moyens (30) pour la saisie manuelle de la valeur de climat (C) prédéfinie.

7. Méthode de détermination de l'altitude pour un altimètre (10) barométrique portable comportant les étapes suivantes :

   - sélection automatique d'une valeur de température de référence ($T_0$) parmi une série de valeurs ($T_S$) contenues dans une base de données embarquée dans l'altimètre (10), la température de référence ($T_0$) correspondant à une estimation de la température de la masse d'air au niveau de la mer,
   - mesure d'une valeur de pression (P) par un capteur de pression (14),
   - calcul d'une valeur d'altitude (H) en fonction de la valeur de pression (P) et en fonction de la température de référence ($T_0$) sélectionnée,

   **caractérisée en ce que,** au cours de l'étape de sélection, la valeur de la température de référence ($T_0$) est sélectionnée en fonction de la date (D) et en fonction d'une valeur de climat (C) prédéfinie.

8. Méthode selon la revendication précédente, **caractérisée en ce que** la valeur de climat (C) est sélectionnée parmi cinq valeurs prédéfinies qui sont : tempéré ($C_{Te}$), méditerranéen ($C_{Me}$), aride ($C_{Ar}$), tropical ($C_{Tr}$), polaire ($C_{Po}$).

9. Méthode selon la revendication 7 ou 8, **caractérisée en ce que** la valeur de la température de référence ($T_0$) est sélectionnée en outre en fonction d'une indication de la position de l'altimètre (10) par rapport à l'équateur sélectionnée parmi deux valeurs correspondant respectivement à l'hémisphère nord et l'hémisphère sud.

10. Méthode selon revendication précédente, **caractérisée en ce que,** lors de la sélection de la position de l'altimètre (10) par rapport à l'équateur, une troisième valeur peut être sélectionnée de manière à commander le fonctionnement de l'altimètre (10) dans un mode non corrigé, et **en ce que**, dans le mode non corrigé, la valeur de la température de référence ($T_0$) est fixée à une valeur déterminée ne tenant pas compte du climat (C).

11. Méthode selon l'une quelconque des revendications 7 à 10, **caractérisée en ce qu'**elle comporte une première étape de correction au cours de laquelle la valeur de la température de référence ($T_0$), sélectionnée lors de l'étape de sélection, est ajustée en fonction du quantième dans le mois en cours de manière à tenir compte des variations de la température de la masse d'air au cours du mois.

**12.** Méthode selon l'une quelconque des revendications 7 à 11, **caractérisée en ce qu'**elle comporte une seconde étape de correction au cours de laquelle la valeur de la température de référence ($T_0$), sélectionnée lors de l'étape de sélection, est ajustée en fonction de l'heure (h), de manière à tenir compte des variations de la température de la masse d'air au cours de la journée.

**13.** Méthode selon l'une quelconque des revendications 7 à 12, **caractérisée en ce qu'**elle comporte en outre une étape de sélection manuelle de la valeur de climat (C).

**Claims**

**1.** Portable barometric altimeter (10) comprising a pressure sensor (14), a calculation unit (16) which determines an altitude value (H) as a function of the pressure (P) measured by the sensor (14) and as a function of a reference temperature ($T_0$) corresponding to an estimate of the temperature of the air mass at sea level, and a time measuring unit (18) that supplies calendar data (D), **characterized in that** it includes a correction circuit (32), which selects the reference temperature value ($T_0$) from among a series of values ($T_S$) contained in a database stored in the altimeter (10), as a function of the date (D) and as a function of a predefined climate value (C).

**2.** Altimeter (10) according to the preceding claim, **characterized in that** the climate value (C) is selected from among five predefined values which are: temperate $C_{Te}$, Mediterranean $C_{Me}$, arid $C_{Ar}$, tropical $C_{Tr}$, polar $C_{Po}$.

**3.** Altimeter (10) according to any of the preceding claims, **characterized in that** the correction circuit (32) also selects the reference temperature value ($T_0$) as a function of an indication of the position of the altimeter (10) relative to the equator, selected from among two values respectively corresponding to the northern hemisphere and the southern hemisphere.

**4.** Altimeter (10) according to any of the preceding claims, **characterized in that** the correction circuit (32) also adjust the selected reference temperature value ($T_0$) as a function of the date of the current month, so as to take account of variations in the air mass temperature during the month.

**5.** Altimeter (10) according to any of the preceding claims, **characterized in that** the correction circuit (32) also adjusts the selected reference temperature value ($T_0$) as a function of the time (h), so as to take account of variations in the air mass temperature during the day.

**6.** Altimeter (10) according to any of the preceding claims, **characterized in that** it includes means (30) for manually inputting the predefined climate value (C).

**7.** Method of determining altitude for a portable barometric altimeter (10) including the following steps:

- automatically selecting a reference temperature value ($T_0$) from among a series of values ($T_S$) contained in a database stored in the altimeter (10), the reference temperature ($T_0$) corresponding to an estimate of the air mass temperature at sea level,
- measuring a pressure value (P) via a pressure sensor (14),
- calculating an altitude value (H) as a function of the pressure value (P) and as a function of the selected reference temperature value ($T_0$),

**characterized in that,** during the selection step, the reference temperature value ($T_0$) is selected as a function of the date (D) and as a function of the predefined climate value (C).

**8.** Method according to the preceding claim, **characterized in that** the climate value (C) is selected from among five predefined values, which are: temperate $C_{Te}$, Mediterranean $C_{Me}$, arid $C_{Ar}$, tropical $C_{Tr}$, polar $C_{Po}$.

**9.** Method according to claim 7 or 8, **characterized in that** the reference temperature value ($T_0$) is also selected as a function of an indication of the position of the altimeter (10) relative to the equator, selected from among two values respectively corresponding to the northern hemisphere and the southern hemisphere.

**10.** Method according to the preceding claim, **characterized in that,** during selection of the position of the altimeter (10) relative to the equator, a third value can be selected so as to control the operation of the altimeter (10) in an uncorrected mode, and **in that**, in the uncorrected mode, the reference temperature value ($T_0$) is fixed at a determined value that does not take account of climate (C).

11. Method according to any of claims 7 to 10, **characterized in that** it includes a first correction step during which the reference temperature value ($T_0$) selected during the selection step, is adjusted as a function of the date in the current month so as to take account of variations in the air mass temperature during the month.

12. Method according to any of claims 7 to 11, **characterized in that** it includes a second correction step during which the reference temperature value ($T_0$) selected during the selection step, is adjusted as a function of the time (h), so as to take account of variations in the air mass temperature during the day.

13. Method according to any of claims 7 to 12, **characterized in that** it further includes a step of manually selecting the climate value (C).

**Patentansprüche**

1. Tragbares barometrisches Höhenmessgerät (10) umfassend einen Drucksensor (14), eine Recheneinheit (16), die einen Höhenwert (H) bestimmt abhängig von dem von dem Drucksensor (14) gemessenen Druck (P) und von einer Referenztemperatur ($T_0$), die einer Schätzung der Temperatur der Luftmasse auf Meereshöhe entspricht, und eine Zeitmesseinheit (18), die eine Kalenderinformation (D) liefert, **dadurch gekennzeichnet, dass** es eine Korrekturschaltung (32) umfasst, die den Referenztemperaturwert ($T_0$) abhängig von dem Datum (D) und einem vordefinierten Klimawert (C) aus einer in einer Datenbank enthaltenen Reihe von Werten ($T_S$) auswählt, die in dem Höhenmessgerät (10) eingebettet ist.

2. Höhenmessgerät (10) gemäss dem vorigen Anspruch, **dadurch gekennzeichnet, dass** der Klimawert (C) aus fünf vordefinierten Klimawerten ausgewählt wird, nämlich: gemässigt ($C_{Te}$), mediterran ($C_{Me}$), trocken ($C_{Ar}$), tropisch ($C_{Tr}$), polar ($C_{Po}$).

3. Höhenmessgerät (10) gemäss einem der vorigen Ansprüche, **dadurch gekennzeichnet, dass** die Korrekturschaltung (32) ferner den Referenztemperaturwert ($T_0$) abhängig von einer Angabe der Position des Höhenmessgeräts (10) in Bezug auf den Äquator ausgewählt wird, wobei die Angabe zwischen zwei Werten, die jeweils der Nord-bzw. der Südhalbkugel entsprechen, ausgewählt wird.

4. Höhenmessgerät (10) gemäss einem der vorigen Ansprüche, **dadurch gekennzeichnet, dass** die Korrekturschaltung (32) ferner den ausgewählten Wert der Referenztemperatur ($T_0$) abhängig von dem aktuellen Monatsdatum einstellt, so dass Änderungen der Luftmasse im Laufe des Monats berücksichtigt werden.

5. Höhenmessgerät (10) gemäss einem der vorigen Ansprüche, **dadurch gekennzeichnet, dass** die Korrekturschaltung (32) ferner den ausgewählten Wert der Referenztemperatur ($T_0$) abhängig von der Uhrzeit (h), einstellt, so dass Änderungen der Luftmasse im Laufe des Tages berücksichtigt werden.

6. Höhenmessgerät (10) gemäss einem der vorigen Ansprüche, **dadurch gekennzeichnet, dass** es Mittel (30) für das manuelle Erfassen des vordefinierten Klimawertes (C) umfasst.

7. Höhenbestimmungsverfahren für ein tragbares barometrisches Höhenmessgerät (10), umfassend die folgenden Schritte:

- automatische Auswahl einer Referenztemperaturwert ($T_0$) aus einer in einer Datenbank enthaltenen Reihe von Werten ($T_S$), die in dem Höhenmessgerät (10) eingebettet ist, wobei die Referenztemperatur ($T_0$) einer Schätzung der Temperatur der Luftmasse auf Meereshöhe entspricht,
- Messen eines Druckwerts (P) durch einen Drucksensor (14),
- Berechnung eines Höhenwerts (H) abhängig von dem Druckwert (P) und dem ausgewählten Referenztemperaturwert ($T_0$),

**dadurch gekennzeichnet, dass** der Wert der Referenztemperatur ($T_0$) abhängig von dem Datum (D) und einem vordefinierten Klimawert (C) im Laufe des Auswahlschritts ausgewählt wird.

**8.** Verfahren gemäss dem vorigen Anspruch, **dadurch gekennzeichnet, dass** der Klimawert (C) aus fünf vordefinierten Klimawerten ausgewählt wird, nämlich: gemässigt ($C_{Te}$), mediterran ($C_{Me}$), trocken ($C_{Ar}$), tropisch ($C_{Tr}$), polar ($C_{Po}$).

**9.** Verfahren gemäss Anspruch 7 oder 8, **dadurch gekennzeichnet, dass** der Referenztemperaturwert ($T_0$) ferner abhängig von einer Angabe der Position des Höhenmessgeräts (10) in Bezug auf den Äquator ausgewählt wird, wobei die Angabe zwischen zwei Werten, die jeweils der Nord- bzw. Südhalbkugel entsprechen, ausgewählt wird.

**10.** Verfahren gemäss dem vorigen Anspruch, **dadurch gekennzeichnet, dass** ein dritter Wert bei der Auswahl der Positionierung des Höhenmessgeräts (10) gegenüber dem Äquator ausgewählt werden kann, um das Höhenmessgeräts (10) in einem nicht korrigierten Betriebsmodus zu steuern, und dass, in dem nicht korrigierten Betriebsmodus, der Wert der Referenztemperatur ($T_0$) auf einen bestimmten Wert festgelegt wird, der das Klima (C) nicht berücksichtigt.

**11.** Verfahren gemäss einem der Ansprüche 7 bis 10, **dadurch gekennzeichnet, dass** es einen ersten Korrekturschritt umfasst, während welchem der bei dem Auswahlschritt ausgewählte Wert der Referenztemperatur ($T_0$) abhängig von dem aktuellen Monatsdatum eingestellt wird, so dass Änderungen der Luftmasse im Laufe des Monats berücksichtigt werden.

**12.** Verfahren gemäss einem der Ansprüche 7 bis 11, **dadurch gekennzeichnet, dass** es einen zweiten Korrekturschritt umfasst, während welchem der bei dem Auswahlschritt ausgewählte Wert der Referenztemperatur ($T_0$) abhängig von der aktuellen Uhrzeit (h) eingestellt wird, so dass Änderungen der Luftmasse im Laufe des Tages berücksichtigt werden.

**13.** Verfahren gemäss einem der Ansprüche 7 bis 12, **dadurch gekennzeichnet, dass** es ferner einen Schritt für das manuelle Erfassen des vordefinierten Klimawertes (C) umfasst.

Fig. 1

Fig. 2

▨ Polaire
▨ Tempéré
▨ Aride
▨ Tropical
▨ Méditerranéen

Fig. 3

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

*   US 5224059 A